# FASCICULE DE BREVET EUROPEEN

(11) **EP 2 279 346 B1**
(45) Date de publication et mention de la délivrance du brevet: **29.04.2015**
(21) Numéro de dépôt: 09730751.6
(22) Date de dépôt: 24.03.2009
(51) Int. Cl.: F03D 11/00, F03D 11/04, F03D 1/00

(54) **DISPOSITIF DE ROULEMENT POUR NACELLE D'EOLIENNE**
LAGERVORRICHTUNG FÜR EINE WINDTURBINENGONDEL
BEARING DEVICE FOR A WIND TURBINE NACELLE

(30) Priorité: 26.03.2008 FR 0851914
(43) Date de publication de la demande: 02.02.2011
(73) Titulaire: DDIS S.A.S., 59300 Valenciennes (FR)
(72) Inventeur: CANINI, Jean Marc, F-59149 Aibes (FR); LHENRY, Bernard Claude, F-71200 Le Creusot (FR)
(74) Mandataire: Balesta, Pierre
(86) Numéro de dépôt international: PCT/FR2009/050501
(87) Numéro de publication internationale: WO 2009/125121

(56) Documents cités:
- EP-A- 1 291 521
- EP-A- 1 985 846
- WO-A-2005/107425
- WO-A-2006/032515
- WO-A-2007/125349
- FR-A- 2 810 374

## Description

La présente invention concerne une nacelle d'éolienne. Celle-ci concerne donc tout particulièrement le domaine de l'éolien.

L'invention trouvera donc son application chez les fournisseurs et exploitants d'énergies renouvelables et chez les installateurs de parcs d'éoliens tant sur la terre ferme qu'en pleine mer dit « offshore ».

La nacelle d'éolienne selon l'invention sera mise en oeuvre chez les fabricants d'éoliens voire, plus généralement, chez les métallurgistes et/ou les entreprises de mécano soudures.

Les éoliennes se composent notamment d'une tour, encore appelée mât, d'une nacelle agencée à l'extrémité supérieure de la tour, de pales et d'un alternateur, lesdites pales permettant, sous l'action du vent, l'entraînement du rotor de l'alternateur pour générer un courant. Les pales et l'alternateur sont agencés sur la nacelle, laquelle intègre également d'autres éléments constitutifs de l'éolienne, notamment un système de freinage des pales, un multiplicateur de vitesse.

Parmi les éoliennes, on distingue les éoliennes à attaque directe ; les éoliennes à attaque directe sont constituées de pales disposées dans un plan plus ou moins vertical et agencées pour être exposées directement face à la trajectoire du vent. Pour cela, l'éolienne est équipée d'un anémomètre pour le contrôle de la trajectoire du vent et d'un système d'orientation de la nacelle permettant de modifier l'exposition des pales selon la mesure effectuée par l'anémomètre.

Selon l'art antérieur connu, la nacelle comprend une base et une tête solidaire de la base. Cette tête intègre l'alternateur et les autres éléments constitutifs de l'éolienne, tel que précisé ci-dessus. En outre, elle reçoit en rotation un moyeu, solidaire du rotor de l'alternateur, sur lequel sont réparties les pales.

Par ailleurs, la base est montée en rotation sur l'extrémité supérieure de la tour. Ce montage en rotation est réalisé au moyen d'un palier disposé à plat sur l'extrémité supérieure de la tour, ce palier recevant ladite base de la nacelle. Ce palier est, par exemple, du type couronne d'orientation à billes capable de supporter des charges combinées exercées par la nacelle reposant sur l'extrémité supérieure de la tour. Cette couronne d'orientation permet la rotation de la nacelle suivant un axe vertical correspondant à l'axe vertical de la tour.

En outre, le système d'orientation de la nacelle sur la tour est agencé entre l'extrémité supérieure de ladite tour et la base de la nacelle, laquelle intègre les éléments constitutifs du système d'orientation.

Une telle conception d'éolienne présente pour inconvénient de nécessiter une excellente planéité de l'extrémité supérieure de la tour destinée à recevoir la couronne ainsi que de la base de la nacelle, entre lesquelles se situe la couronne à billes.

Parmi l'art antérieur connu, le document WO-2007/125349 divulgue une turbine comprenant une nacelle montée à l'extrémité supérieure d'une tour. La nacelle comprend un corps et une tête. Le corps comporte une extrémité supérieure conique prolongée vers le bas par une chambre tubulaire, ledit corps venant se loger par l'intermédiaire de paliers de roulement, dans une zone de réception de forme complémentaire audit corps agencée à l'extrémité de la tour. La tête comporte, d'une part, une cavité permettant le montage rotatif des pales selon un axe plus ou moins horizontal et la réception d'un alternateur et, d'autre part, un axe s'étendant vers le bas et venant se loger dans la chambre tubulaire du corps. Une liaison pivot, constituée par les roulements, est agencée entre cet axe et cette chambre tubulaire. Une telle conception présente pour inconvénients de nécessiter l'utilisation d'une tour présentant une conception spécifique pour la réception d'une telle nacelle. Une telle conception augmente en outre le coût de réalisation de la tour pour la réception de la nacelle.

La présente invention a pour objet de pallier ces inconvénients. Elle permet de s'adapter au chargement en porte à faux consécutif à la masse de l'alternateur à attaque directe tout en permettant sa mise en oeuvre sur des tours traditionnelles, sans augmenter le coût de construction de telles tours. La conception de la nacelle selon la présente invention présente en outre pour avantage de réduire son coût de fabrication et de permettre son installation sur des éoliennes existantes, pour le remplacement des nacelles, la nacelle selon la présente invention pouvant s'adapter très facilement sur différents types de tour au moyen d'un bridage.

A ce titre, l'invention concerne une nacelle d'éolienne agencée pour être assemblée sur l'extrémité supérieure d'une tour et pour supporter les éléments constitutifs de ladite éolienne, notamment un alternateur et des pales montées en rotation et entraînant le rotor de l'alternateur.

La nacelle comprend un corps constitué d'une base apte à être fixée sur l'extrémité supérieure de la tour. En outre, ce corps comprend également une chambre tubulaire prolongeant vers le haut, selon un axe vertical, ladite base.

La nacelle comprend également une tête constituée d'une cavité et d'une virole. La cavité est agencée pour le montage rotatif des pales selon un axe défini plus ou moins horizontalement et pour la réception de l'alternateur. La virole est solidaire de la cavité et agencée selon un axe vertical pour être montée à pivotement sur la chambre tubulaire du corps.

En outre, la nacelle comprend des moyens de liaison pivot agencés entre la virole et la chambre tubulaire, ces moyens de liaison pivot permettant le montage à pivotement de la tête sur le corps.

Une telle conception permet de s'affranchir des inconvénients des nacelles de l'art antérieur, à savoir de mettre en oeuvre une tour comprenant une excellente planéité à son extrémité afin de recevoir ladite nacelle. En outre, elle permet son adaptation à tout type de tour traditionnelle par une simple fixation de la nacelle à l'extrémité de ladite tour.

Par ailleurs, la conception de la nacelle selon l'invention présente pour avantage de permettre la répartition des efforts directement sur la nacelle entre la virole et la chambre tubulaire.

Un autre aspect de la présente invention concerne une éolienne comprenant une tour s'étendant verticalement, une nacelle d'éolienne selon l'invention, des pales et un alternateur agencés au niveau de la cavité de la tête, la base du corps étant fixée sur l'extrémité supérieure de la tour.

Les caractéristiques et avantages de la présente invention apparaîtront à la lecture de la description suivante d'un mode préférentiel de conception de la nacelle, laquelle s'appuie sur des figures, parmi lesquelles :
- la figure 1 représente en perspective un premier mode de conception de la nacelle d'éolienne selon l'invention ;
- la figure 2 représente en coupe les éléments constitutifs de la nacelle, selon la figure 1 ;
- la figure 3 représente une éolienne équipée de la nacelle selon la figure 1;
- la figure 4 représente en perspective et en coupe partielle une variante de conception de la nacelle selon l'invention ;
- la figure 5 représente une vue en coupe de derrière, de la nacelle selon la figure 4 ;
- les figures 6 et 7 représentent deux projections montrant certains détails VI et VII de la figure 5.

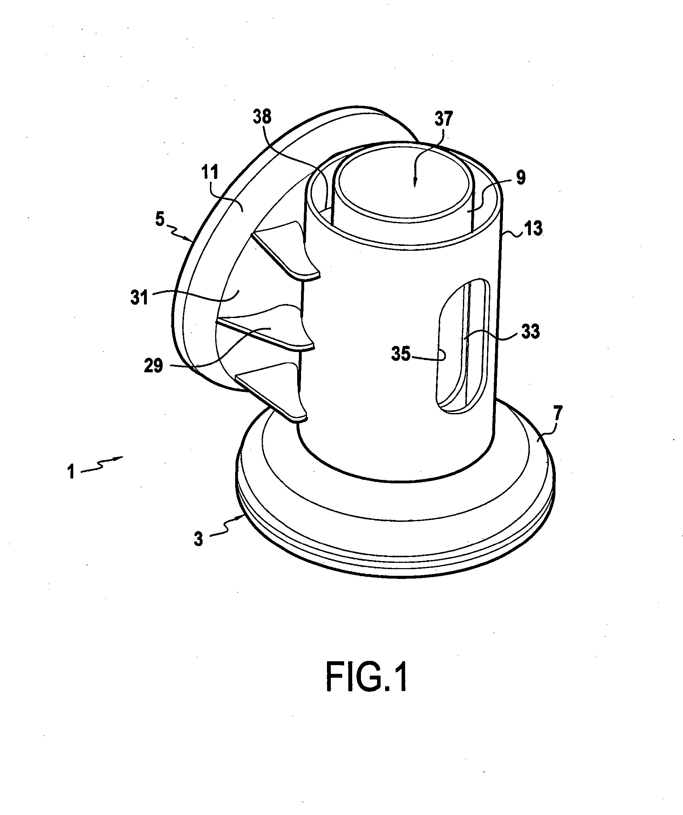

Telle qu'illustrée à la figure 1, la nacelle d'éolienne 1 selon l'invention comprend un corps 3 et une tête 5. Le corps est constitué d'une base 7 et d'une chambre tubulaire 9 prolongeant vers le haut selon un axe vertical X₁ ladite base 7. La tête 5 est constituée d'une cavité 11 et d'une virole 13. La virole 13 est solidaire de la cavité 11, ladite virole étant agencée selon un axe vertical pour être monté à pivotement sur la chambre tubulaire 9 du corps 3. Pour cela, la virole 13 comprend un diamètre interne D₁ et la chambre tubulaire comprend un diamètre externe D₂, le diamètre interne D₁ étant supérieur au diamètre externe D₂, ce qui permet d'insérer la virole sur la chambre tubulaire.

En outre, la nacelle comprend des moyens de liaison pivot agencés entre la virole 13 et la chambre tubulaire 9, ces moyens de liaison pivot permettant de monter à pivotement la tête 5 sur le corps 3.

Ces moyens de liaison pivot sont constitués par deux paliers 15,17 agencés entre le diamètre interne D₁ de la virole 13 et le diamètre externe D₂ de la chambre tubulaire 9. Ces deux paliers 15,17 sont conçus pour supporter des charges radiales exercées par la virole sur la chambre tubulaire. De telles charges radiales sont occasionnées entre autre par la rotation des pales de l'éolienne, et par la poussée exercée par le vent sur lesdites pales.

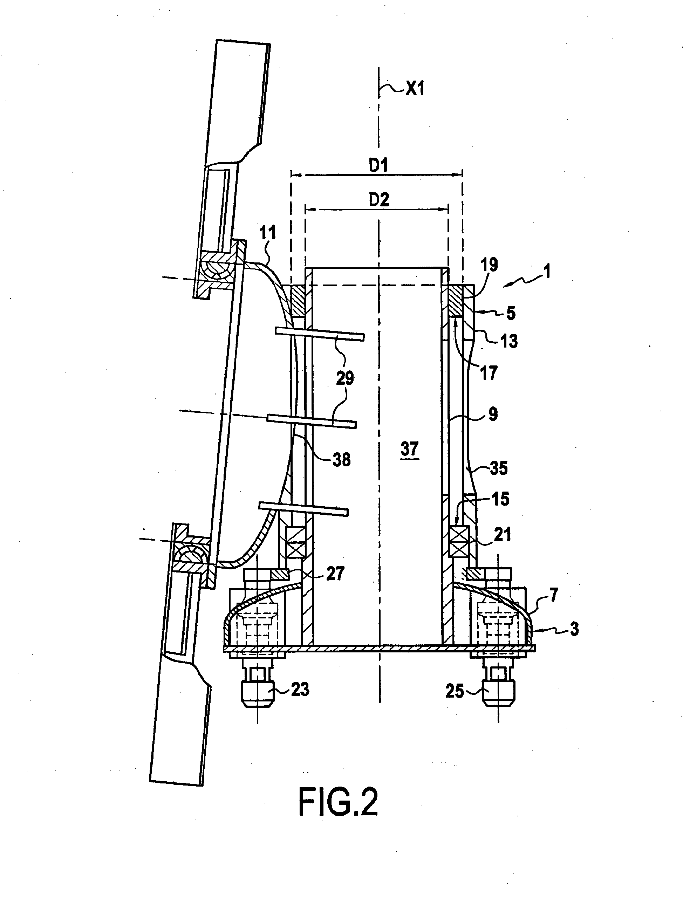

Ces paliers 15,17 sont agencés à l'extrémité interne supérieure 19 et à l'extrémité inférieure 21 de la virole 13, tel que cela est illustré sur la figure 2. En outre, le palier 17 agencé à l'extrémité supérieure 19 est constitué d'un palier à patin de freinage, lequel a pour fonction de ralentir et freiner la tête 5 de la nacelle par rapport au corps 3 lors de sa rotation. En outre, le palier 15 agencé à l'extrémité inférieure 21 est constitué d'un palier à roulement reprenant un chargement axial et radial. L'agencement des paliers aux extrémités supérieure et inférieure de la virole 13 permet une répartition optimale de la charge. De manière préférentielle, le palier à roulement 15 est constitué d'un roulement à rouleaux coniques ou sphériques. En outre, une inversion des paliers 15, 17 est envisageable.

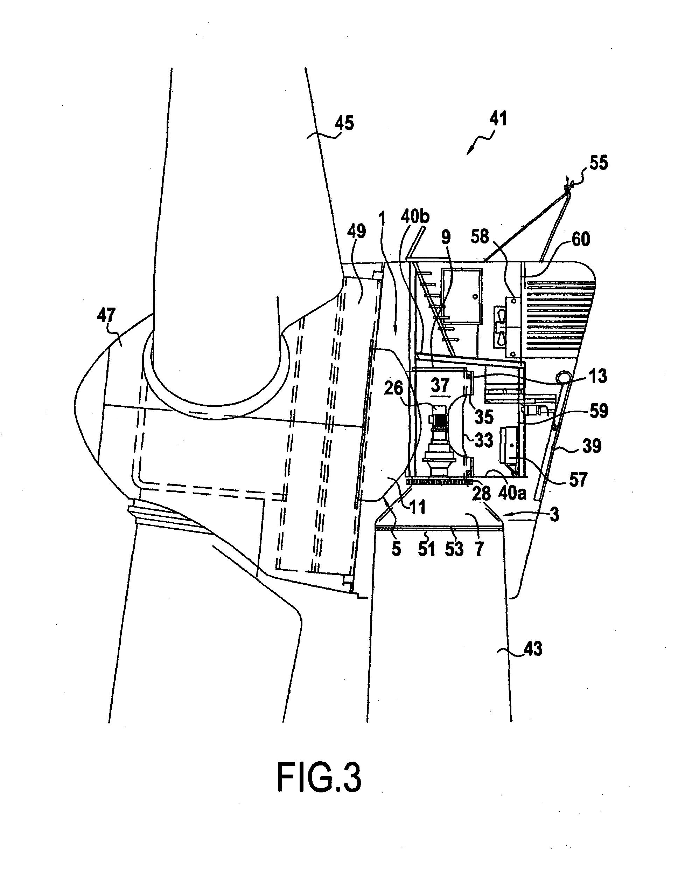

Telle qu'illustrée sur les figures 1 et 2, la nacelle 1 comprend un système d'orientation permettant de réaliser la rotation de la tête 5 par rapport au corps 3. Ce système d'orientation est agencé entre la base 7 du corps et l'extrémité inférieure de la virole 13. Celui-ci comprend de préférence deux moteurs 23,25 répartis symétriquement sur la base 7, tel qu'illustré sur la figure 2. Ces moteurs 23,25 sont, de préférence, intégrés en partie à l'intérieur de la base 7. Ces moteurs 23,25 engrènent sur une couronne externe 27 agencée à l'extrémité inférieure de la virole 13. On peut toutefois prévoir un seul moteur 26, tel qu'illustré sur la figure 3, agencé à l'intérieur de la chambre tubulaire 9 et engrenant sur une couronne interne 28 agencée sur la virole 13. Par ailleurs, le nombre de moteurs peut être supérieur à deux, en fonction des dimensions et de la puissance de l'éolienne ; dans ce cas, les moteurs sont répartis uniformément autour de la virole 13.

De manière préférentielle et non limitative, la base 7 du corps 3 comprend une forme bombée, ou en corolle. De même, la cavité 11 de la tête 5 comprend une forme bombée, ou d'une corolle. Cette forme de fond bombée permet notamment de faciliter l'intégration des éléments constitutifs de l'éolienne tel que cela sera décrit ci-après.

En outre, la tête 5 comprend des pièces de renfort 29 agencées entre la cavité 11 et la virole 13, tel qu'illustré aux figures 1 et 2. Ces pièces de renfort 29 sont réparties uniformément de chaque côté de la virole et soudées entre la face externe de cette virole et la face arrière 31 de la cavité 11. De telles pièces de renforts ont pour fonction de renforcer la structure de ladite tête 5 soumise à des contraintes importantes lors de la rotation des pales de l'éolienne.

Telle qu'illustrée sur les figures 1 à 3, la chambre tubulaire 9 du corps 3 comprend une lumière 33. De même, la virole 13 comprend une lumière 35 dont les formes et le positionnement sont sensiblement identiques à celui de la lumière sur la chambre tubulaire 9. Ainsi, lors de la rotation de la virole 13 sur la chambre tubulaire 9, les deux lumières 33,35 sont aptes à correspondre l'une avec l'autre, ce qui présente pour fonction de permettre l'accès à l'intérieur 37 de la chambre tubulaire, laquelle est susceptible de contenir des éléments constitutif de l'éolienne, tels que la motorisation du système d'orientation, une armoire électrique ou un automate de gestion desdits éléments de l'éolienne.

De manière préférentielle et non limitative, la portion commune de la face arrière 31 de la cavité 11, en contact avec la virole 13, comprend une ouverture 38, illustrée en figures 1 et 2, permettant un accès à l'intérieur de ladite cavité 11 depuis l'intérieur de ladite virole 13, pour les opérations de maintenance sur l'alternateur et sur le moyeu supportant les pales de l'éolienne, lesdits éléments étant décrits ci-après. L'opérateur pénètre dans un premier temps à l'intérieur 37 de la chambre tubulaire 9 tel que précisé ci-dessus ; puis, par une rotation d'un demi-tour, par exemple, de la tête 5 par rapport au corps 3, fait correspondre la lumière 33 de la chambre tubulaire 9 avec l'ouverture 38 sur la cavité 11, ce qui permet audit opérateur situé dans la chambre tubulaire 9 d'accéder à ladite ouverture 38.

En outre, la nacelle comprend de préférence une échelle implantée à l'intérieur 37 de la chambre tubulaire 9 pour accéder à un niveau supérieur, tel que décrit ci-après, en passant par l'extrémité supérieure de ladite chambre tubulaire 9.

La nacelle comprend une cabine 39, illustrée en figure 3, cette cabine étant solidaire de la virole 13 et s'étendant à l'opposé de la cavité 11, fixée à la virole 13. Cette cabine 39 communique avec la lumière sur la virole. Elle a entre autre pour fonction de permettre la réception des éléments constitutifs de l'éolienne et de permettre l'accès aux personnes notamment pour les opérations de maintenance. Cette cabine 39 comprend, de préférence, un plancher inférieur 40a et un plancher supérieur 40b, illustrés en figure 3. Le plancher inférieur 40a est, par exemple, agencé au niveau de l'extrémité inférieure de la virole 13. Le plancher supérieur 40b est, par exemple, agencé au niveau de l'extrémité supérieure de la chambre tubulaire et il est muni d'une ouverture communiquant avec ladite extrémité supérieure de la chambre tubulaire, de manière à accéder à l'intérieur 37 de celle-ci.

La figure 3 illustre une éolienne 41 constituée d'une nacelle 1 selon l'invention. Cette éolienne comprend une tour 43, encore appelée mât, s'étendant verticalement, la hauteur de la tour dépendant essentiellement de la puissance de l'éolienne et des pales agencées sur celle-ci.

A ce sujet, la figure 3 illustre les pales 45, de préférence au nombre de trois, qui sont agencées sur un moyeu 47 présentant un nez fuselé. L'éolienne comprend un alternateur 49 permettant de générer un courant alternatif. L'alternateur est intégré à l'intérieur du moyeu 47 et fixé en rotation à l'intérieur de la cavité 11 de la tête 5 de la nacelle, tel qu'illustré sur la figure 3.

En outre, le moyeu 47 est solidaire du rotor de l'alternateur 49, la rotation des pales et du moyeu générée par l'action du vent permet donc d'entraîner la rotation du rotor de l'alternateur et de générer un courant électrique. Le diamètre de la cavité 11 est donc dimensionné en fonction du diamètre de l'alternateur 49 et du diamètre des éléments du moyeu 47, selon les éléments que ladite cavité supporte et selon la conception de l'alternateur. A ce titre, on choisira de préférence un alternateur composé d'un rotor externe entourant symétriquement le stator. L'assemblage du moyeu supportant les pales et de l'alternateur sur la cavité permet un montage en rotation entre ces éléments selon un axe défini plus ou moins horizontalement.

La base 7 du corps 3 présente un diamètre à son extrémité correspondant au diamètre de l'extrémité supérieure 51 de la tour 43. Cette base repose sur l'extrémité supérieure de la tour et elle est fixée avec celle-ci. La fixation est réalisée, de manière préférentielle et non limitative, par bridage 53 entre ces deux éléments.

L'éolienne 1 comprend d'autres éléments, que l'on retrouve également sur les éoliennes de l'art antérieur, à savoir un anémomètre 55 fixé sur la cabine 39 agencée sur la nacelle 1, tel que décrit précédemment. L'anémomètre est fixé en partie supérieure arrière de ladite cabine 39. Cet anémomètre 55 permet la mesure du vent et l'orientation de celui-ci. Cet anémomètre est relié à un automate 57 gérant entre autre le système d'orientation en agissant sur les moteurs pour permettre la rotation de la tête 5 par rapport au corps 3, de manière à modifier la position des pales 45 et de les disposer face au vent. D'autres éléments ou accessoires sont intégrés dans la cabine 39, tels que les convertisseurs de puissance et les centrales de refroidissement 58. Ces divers éléments ou accessoires, par exemple, agencés sur les planchers inférieur 40a et supérieur 40b, ou sur les parois internes 59,60 de ladite cabine 39.

On comprend que la fixation de la base de la nacelle sur l'extrémité supérieure de la tour permet de supprimer les exigences de planéité requises précédemment sur les tours des éoliennes de l'art antérieur sur lesquelles la base est mobile par rapport à ladite tour.

En outre, les caractéristiques techniques décrites pour le mode de conception de la nacelle 1 et de l'éolienne 41 équipée d'une telle nacelle 1, telles qu'illustrées aux figures 1 à 3 restent applicables à toute variante de conception de celle-ci, sans sortir du cadre de la présente invention.

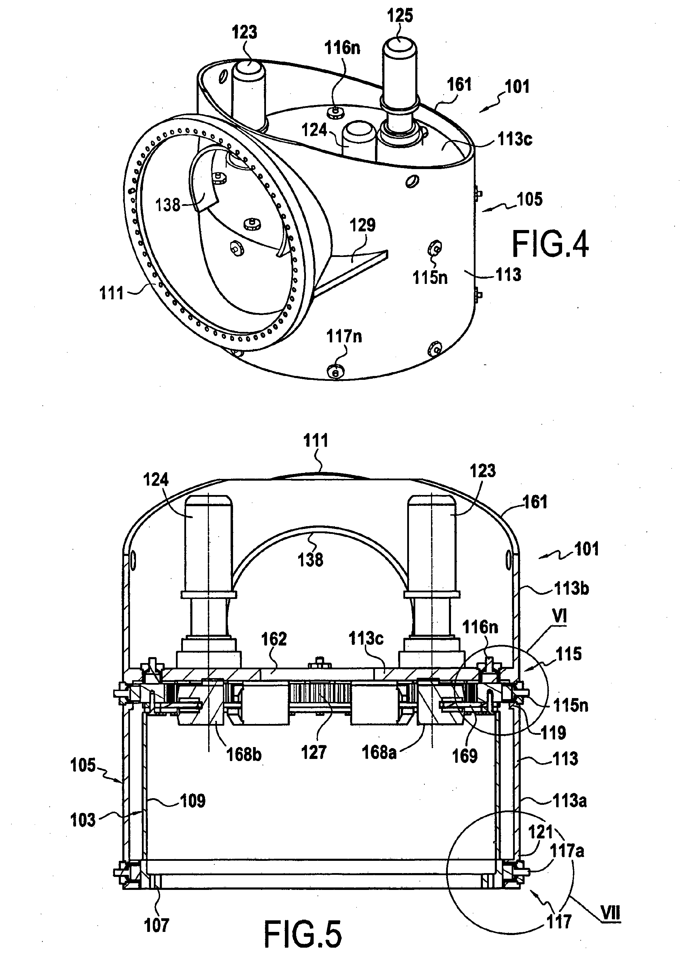

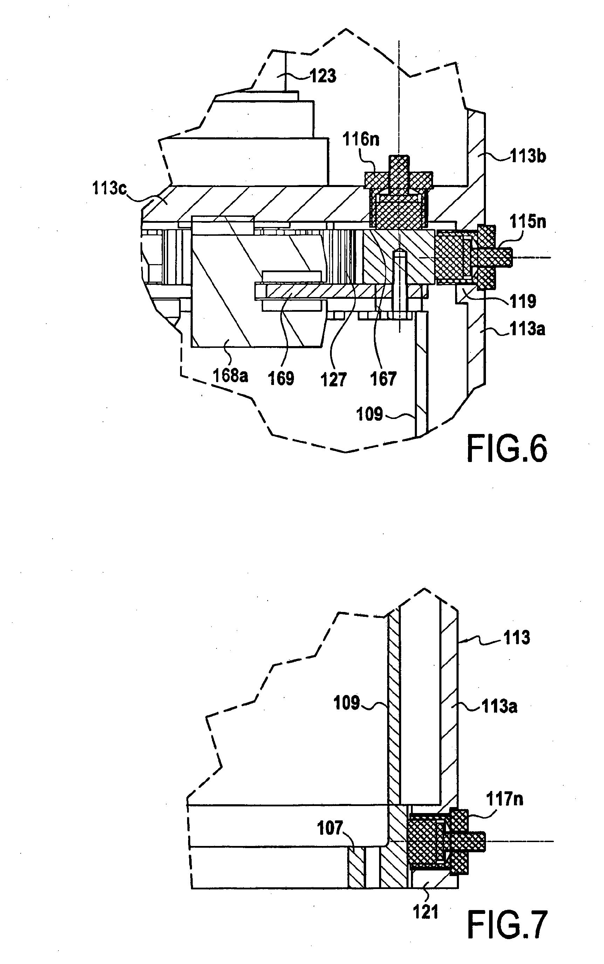

D'autres variantes sont également envisageables sans sortir du cadre de l'invention. Ainsi, les figures 4 à 7 illustrent une variante de nacelle 101 selon laquelle le corps 103 comprend d'une part, une base 107 de forme circulaire s'étendant, de préférence, vers l'intérieur, dans un plan horizontal, tel qu'illustré en figures 5 et 7, cette base 107 étant agencée pour être bridée à l'extrémité supérieure de la tour d'une éolienne semblable à l'éolienne illustrée en figure 3, et d'autre part, une chambre tubulaire 109 s'étendant vers le haut par rapport à la base 107, dont l'extrémité supérieure reçoit une couronne interne 127, tel qu'illustré en figures 5 et 6. En outre, la tête 105 de la nacelle 101 comprend une cavité 111 et une virole 113 entre lesquelles sont prévus des renforts 129. Cette virole 113 est divisée en deux compartiments à savoir un compartiment inférieur 113a et un compartiment supérieur 113b. La chambre tubulaire 109 est emboîtée dans le compartiment inférieur 113a, des moyens de liaison pivot étant agencés entre ce compartiment inférieur 113a de la virole et cette chambre tubulaire 109.

De manière préférentielle, selon cette variante de nacelle 101, trois moteurs 123, 124, 125 sont répartis uniformément et engrènent sur la couronne interne 127, tel qu'illustré sur les figures 4 à 6, l'ensemble constituant un système d'orientation de la tête 105 par rapport au corps 103. Ces moteurs 123, 124, 125 sont logés dans le compartiment supérieur 113b de la virole 113, tel qu'illustré sur la figure 4, et sont montés directement sur la paroi de séparation 113c entre le compartiment inférieur 113a et le compartiment supérieur 113b.

Par ailleurs, selon cette variante de nacelle 101, la cavité 111 comprend une ouverture 138, telle qu'illustrée sur les figures 4 et 5, communiquant avec le compartiment supérieur 113b de la virole 113, ce qui permet d'accéder à l'intérieur de cette cavité 111. Afin de faciliter l'accès par l'ouverture 138 aux éléments de l'alternateur de l'éolienne, l'extrémité supérieure 161 du compartiment supérieur 113b de la virole 113 présente une coupe en biseau, telle qu'illustrée sur les figures 4 et 5. En outre, la paroi de séparation 113c entre le compartiment inférieur 113a et le compartiment supérieur 113b comprend une ouverture 162, illustrée en figure 5, permettant l'accès dans ledit compartiment inférieur 113a, notamment pour les opérations de maintenance sur la courroie interne 127 et les pignons des moteurs 123, 124, 125 engrenant sur cette courroie interne 127.

Selon cette variante de réalisation de la nacelle 101, les moyens de liaison pivot entre la chambre tubulaire 109 et le compartiment inférieur 113a de la virole 113 sont mis en oeuvre par des paliers 115, 117 agencés entre le diamètre interne du compartiment inférieur 113a de la virole 113 et le diamètre externe de la chambre tubulaire 109 au niveau des extrémités supérieure 119 et inférieure 121 dudit compartiment inférieur 113a, tel qu'illustré sur les figure 4 à 7. Ces paliers 115, 117 sont constitués par des patins 115n, 117n, illustrés en détail aux figures 6 et 7, répartis uniformément autour de la virole au niveau des extrémités supérieure 119 et inférieure 121, tel qu'illustré en figure 4. Chaque pallier 115 et 117 et de préférence constitué de huit patins 115n, 117n uniformément répartis.

De même, tel qu'illustré en figure 6, on prévoit des patins 116n similaires aux patins 115n, 117n ; ces patins 116n sont solidaires de la paroi de séparation 113c et prennent appui sur l'extrémité supérieure de la chambre tubulaire 109 soit directement soit indirectement, par l'intermédiaire de la courroie interne 127, lesdits patins 116n prenant dans ce cas appui sur la face supérieure 167 de cette courroie interne 127. Ces patins 116n sont de préférence au nombre de huit et répartis uniformément autour de la paroi de séparation 113c de la virole 113, tel qu'illustré en figure 4. Ainsi la virole 113 de la tête 105 repose la chambre tubulaire 109 du corps 103.

De préférence, de tels patins 115n, 116n, 117n sont de la marque « Eternum^{®} ». Par ailleurs, de tels patins 115n, 116n, 117n peuvent être envisagés sur la nacelle 1 illustrée aux figures 1 à 3.

Une telle liaison pivot présente pour avantage de supprimer l'utilisation de paliers à roulements onéreux et assure une longévité de la liaison pivot mise en oeuvre entre la virole 113 et la chambre tubulaire 109.

Selon cette variante de nacelle 101, un système de freinage est agencé entre la paroi de séparation 113c de la virole 113 et l'extrémité supérieure de la chambre tubulaire 109. Ce système de freinage est de préférence constitué d'au moins un étrier de frein 168a 168b solidaire de la face inférieure 166 de la paroi de séparation 113c et d'un disque de frein 169 solidaire de l'extrémité supérieure de la chambre tubulaire 109, tel qu'illustré sur les figures 5 et 6. D'autres mode de réalisation de système de freinage entre la virole 113 et la chambre tubulaire 109 reste toutefois envisageables.

Bien entendu, la nacelle 101 illustrée en figure 4 comprend une cabine solidaire de la virole 113 et peut être mise en oeuvre sur l'éolienne 47 telle qu'illustrée en figure 3.

## Revendications

1. Nacelle d'éolienne (1, 101) agencée pour être assemblée sur l'extrémité supérieure d'une tour (43) et pour supporter les éléments constitutifs de ladite éolienne, à savoir au moins des pales (45) et un alternateur (49), **caractérisée en ce qu'**elle comprend :
a) un corps (3,103) constitué d'une base (7,107) apte à être fixée sur ladite extrémité supérieure (51) de la tour et d'une chambre tubulaire (9,109) prolongeant vers le haut selon un axe vertical ladite base ;
b) une tête (5,105) constituée d'une cavité (11,111) et d'une virole (13,113), ladite cavité étant agencée notamment pour le montage rotatif des pales (45) selon un axe plus ou moins horizontal et pour la réception de l'alternateur (49), ladite virole étant solidaire de la cavité et agencée selon un axe vertical pour être montée à pivotement sur la chambre tubulaire ;
c) et des moyens de liaison (15,17, 115,117) pivot, agencés entre la virole (13,113) et la chambre tubulaire (9,109), permettant le montage à pivotement de la tête (5,105) sur le corps (3,103).

2. Nacelle d'éolienne (1,101) selon la revendication 1, dans laquelle la virole (13,113) comprend un diamètre interne et la chambre tubulaire (9,109) comprend un diamètre externe, les moyens de liaison pivot étant constitués par deux paliers (15,17, 115,117) agencés entre ledit diamètre interne et ledit diamètre externe.

3. Nacelle d'éolienne (1) selon la revendication 2, dans laquelle les paliers (15,17) sont agencés aux extrémités internes supérieure (19) et inférieure (21) de la virole (13).

4. Nacelle d'éolienne (1) selon la revendication 3, dans laquelle l'un (15) des paliers est à roulement et l'autre (17) est à patin de freinage.

5. Nacelle d'éolienne (1) selon l'une des revendications 2 à 4, **caractérisée en ce que** la chambre tubulaire (9) et la virole (13) comprennent chacune une lumière (33,35), lesdites lumières étant aptes à correspondre selon l'orientation de ladite virole (13) par rapport à ladite chambre tubulaire (9).

6. Nacelle d'éolienne (1) selon la revendication 5, **caractérisée en ce que** la portion commune entre la face arrière (31) de la cavité (11) et la virole (13) comprend une ouverture (38) apte à correspondre avec la lumière (33) de la chambre tubulaire (9) selon l'orientation de la virole (13) par rapport à ladite chambre tubulaire (9).

7. Nacelle d'éolienne (101) selon la revendication 2, dans laquelle les paliers (115, 117) sont agencés aux extrémités supérieure (119) et inférieure (121) d'un compartiment inférieur (113a) de la virole (113).

8. Nacelle d'éolienne (101) selon la revendication 7, dans laquelle les paliers (115, 117) comprennent des patins (115n, 117n) uniformément répartis autour de la virole (13').

9. Nacelle d'éolienne (101) selon l'une des revendications 7 ou 8, dans laquelle une ouverture (138) permet l'accès à l'intérieur de la cavité (111), cette ouverture (138) communiquant avec un compartiment supérieur (113b) de la virole (113).

10. Nacelle d'éolienne (101) selon la revendication 9, dans laquelle les compartiments inférieur (113a) et supérieur (113b) de la virole (113) sont séparés par une paroi de séparation (113c) dans laquelle est aménagée une ouverture (162).

11. Nacelle d'éolienne (101) selon la revendication 10, dans laquelle des patins (116n) sont agencés entre la paroi de séparation (113c) et l'extrémité supérieure de la chambre tubulaire (109).

12. Nacelle d'éolienne (101) selon l'une des revendications 7 à 11, dans laquelle un système de freinage (168a, 168b, 169) est agencé entre la virole (113) et la chambre tubulaire (109).

13. Nacelle d'éolienne (1, 101) selon l'une des revendications précédentes, **caractérisée en ce qu'**elle comprend un système d'orientation (23, 25, 123, 124, 125) agencé entre la tête (5, 105) et le corps (3, 103) pour entraîner la rotation de ladite tête par rapport audit corps.

14. Nacelle d'éolienne (1, 101) selon l'une des revendications précédentes, **caractérisée en ce que** la tête (5, 105) comprend des pièces de renfort (29, 129) agencées entre la cavité (11, 111) et la virole (13, 113).

15. Eolienne (41) comprenant au moins une tour (43) s'étendant verticalement, une nacelle (1, 101) selon l'une des revendications 1 à 14, des pales (45) et un alternateur (49) agencés au niveau de la cavité (11,111) de la tête, la base (7,107) du corps étant fixée sur l'extrémité supérieure (51) de la tour.

16. Eolienne (41) selon la revendication 15, **caractérisée en ce que** la fixation de la base (7,107) du corps sur l'extrémité supérieure (51) de la tour (43) est réalisée par bridage (53) entre lesdits éléments.

## Patentansprüche

1. Windturbinengondel (1, 101), die derart angeordnet ist, dass sie auf dem oberen Ende eines Turms (43) befestigt ist und die Bestandteile der Windturbine trägt, nämlich mindestens einen der Flügel (45) und einen Wechselstromgenerator (49), **dadurch gekennzeichnet, dass** sie umfasst:
a) einen Körper (3, 103), der von einer Basis (7, 107), die geeignet ist, auf dem oberen Ende (51) des Turms befestigt zu werden, und einer röhrenförmigen Kammer (9, 109) gebildet ist, die die Basis entlang einer Vertikalachse nach oben verlängert,
b) einen Kopf (5, 105), der von einem Hohlraum (11, 111) und einem Ring (13, 113) gebildet ist, wobei der Hohlraum insbesondere für die rotierende Montage der Flügel (45) entlang einer mehr oder weniger horizontalen Achse und für die Aufnahme des Wechselstromgetriebes (49) angeordnet ist, wobei der Ring mit dem Hohlraum verbunden und entlang einer Vertikalachse angeordnet ist, um schwenkbar auf der röhrenförmigen Kammer montiert zu werden,
c) und Schwenkverbindungsmittel (15, 17, 115, 117), die zwischen dem Ring (13, 113) und der röhrenförmigen Kammer (9, 109) angeordnet sind und die schwenkbare Montage des Kopfes (5, 105) auf dem Körper (3, 103) ermöglichen.

2. Windturbinengondel (1, 101) nach Anspruch 1, bei der der Ring (13, 113) einen Innendurchmesser und die röhrenförmige Kammer (9, 109) einen Außendurchmesser umfasst, wobei die Schwenkverbindungsmittel von zwei Lagern (15, 17, 115, 117) gebildet sind, die zwischen dem Innendurchmesser und dem Außendurchmesser angeordnet sind.

3. Windturbinengondel (1) nach Anspruch 2, bei der die Lager (15, 17) an den oberen (19) und unteren (21) inneren Enden des Ringes (13) angeordnet sind.

4. Windturbinengondel (1) nach Anspruch 3, bei der eines der Lager (15) ein Wälzlager und das andere (17) ein Lager mit Bremsbacken ist.

5. Windturbinengondel (1) nach einem der Ansprüche 2 bis 4, **dadurch gekennzeichnet, dass** die röhrenförmige Kammer (9) und der Ring (13) jeweils eine Öffnung (33, 35) umfassen, wobei die Öffnungen geeignet sind, je nach Ausrichtung des Ringes (13) in Bezug zu der röhrenförmigen Kammer (9) übereinzustimmen.

6. Windturbinengondel (1) nach Anspruch 5, **dadurch gekennzeichnet, dass** der gemeinsame Abschnitt zwischen der Rückseite (31) des Hohlraums (11) und dem Ring (13) eine Öffnung (38) umfasst, die geeignet ist, mit der Öffnung (33) der röhrenförmigen Kammer (9) je nach Ausrichtung des Ringes (13) in Bezug zu der röhrenförmigen Kammer (9) übereinzustimmen.

7. Windturbinengondel (101) nach Anspruch 2, bei der die Lager (115, 117) an den oberen (119) und unteren (121) Enden eines unteren Abteils (113a) des Ringes (113) angeordnet sind.

8. Windturbinengondel (101) nach Anspruch 7, bei der die Lager (115, 117) Gleitschuhe (115n, 117n) umfassen, die einheitlich um den Ring (13') verteilt sind.

9. Windturbinengondel (101) nach einem der Ansprüche 7 oder 8, bei der eine Öffnung (138) den Zugang zum Inneren des Hohlraums (111) ermöglicht, wobei diese Öffnung (138) mit einem oberen Abteil (113b) des Ringes (113) in Verbindung steht.

10. Windturbinengondel (101) nach Anspruch 9, bei der die unteren (113a) und oberen (113b) Abteile des Ringes (113) durch eine Trennwand (113c), in der eine Öffnung (162) ausgenommen ist, getrennt sind.

11. Windturbinengondel (101) nach Anspruch 10, bei der die Gleitschuhe (116n) zwischen der Trennwand (113c) und dem oberen Ende der röhrenförmigen Kammer (109) angeordnet sind.

12. Windturbinengondel (101) nach einem der Ansprüche 7 bis 11, bei der ein Bremssystem (168a, 168b, 169) zwischen dem Ring (113) und der röhrenförmigen Kammer (109) angeordnet ist.

13. Windturbinengondel (1, 101) nach einem der vorhergehenden Ansprüche, **dadurch gekennzeichnet, dass** sie ein Ausrichtungssystem (23, 25, 123, 124, 125) umfasst, das zwischen dem Kopf (5, 105) und dem Körper (3, 103) angeordnet ist, um die Drehung des Kopfes in Bezug zum Körper anzutreiben.

14. Windturbinengondel (1, 101) nach einem der vorhergehenden Ansprüche, **dadurch gekennzeichnet, dass** der Kopf (5, 105) Verstärkungsteile (29, 129) umfasst, die zwischen dem Hohlraum (11, 111) und dem Ring (13, 113) angeordnet sind.

15. Windturbine (41), umfassend mindestens einen Turm (43), der sich vertikal erstreckt, eine Gondel (1, 101) nach einem der Ansprüche 1 bis 14, Flügel (45) und ein Wechselstromgetriebe (49), die im Bereich des Hohlraums (11, 111) des Kopfes angeordnet sind, wobei die Basis (7, 107) des Körpers am oberen Ende (51) des Turms befestigt ist.

16. Windturbine (41) nach Anspruch 15, **dadurch gekennzeichnet, dass** die Befestigung der Basis (7, 107) des Körpers am oberen Ende (51) des Turms (43) durch Flanschverbindung (53) zwischen den Elementen erfolgt.

## Claims

1. A wind turbine nacelle (1, 101) arranged to be assembled on the top end of a tower (43) and to support the component elements of said wind turbine, i.e. at least blades (45) and an alternator (49), **characterized in that** it comprises:
a) a body (3, 103) constituted by a base (7, 107) suitable for being fastened on said top end (51) of the tower and a tubular chamber (9, 109) extending upwards along a vertical axis of said base;
b) a head (5, 105) constituted by a dish (11, 111) and a bushing (13, 113), said dish being arranged in particular for rotary mounting of the blades (45) on an axis that is more or less horizontal and for receiving the alternator (49), said bushing being secured to the dish and being arranged about a vertical axis so as to be pivotally mounted on the tubular chamber; and
c) pivot connection means (15, 17, 115, 117) arranged between the bushing (13, 113) and the tubular chamber (9, 109) to enable the head (5, 105) to be pivotally mounted on the body (3, 103).

2. A wind turbine nacelle (1, 101) according to claim 1, wherein the bushing (13, 113) has an inside diameter and the tubular chamber (9, 109) has an outside diameter with the pivot means being constituted by two bearings (15, 17, 115, 117) arranged between said inside diameter and said outside diameter.

3. A wind turbine nacelle (1) according to claim 2, wherein the bearings (15, 17) are arranged on the inside at the top (19) and bottom (21) ends of the bushing (13).

4. A wind turbine nacelle (1) according to claim 3, wherein one of the bearings (15) is a ball bearing and the other bearing (17) is a brake shoe bearing.

5. A wind turbine nacelle (1) according to any one of claims 2 to 4, **characterized in that** each of the tubular chamber (9) and the bushing (13) includes a slot (33, 35), said slots being suitable for coming into correspondence depending on the orientation of said bushing (13) relative to said tubular chamber (9).

6. A wind turbine nacelle (1) according to claim 5, **characterized in that** the common portion between the rear face (31) of the dish (11) and the bushing (13) includes an opening (38) suitable for corresponding with the slot (33) in the tubular chamber (9) depending on the orientation of the bushing (13) relative to said tubular chamber (9).

7. A wind turbine nacelle (101) according to claim 2, wherein the bearings (115, 117) are arranged at the top (119) and bottom (121) ends of a bottom compartment (113a) of the bushing (113).

8. A wind turbine nacelle (101) according to claim 7, wherein the bearings (115, 117) comprise shoes (115n, 117n) uniformly distributed around the bushing (113).

9. A wind turbine nacelle (101) according to claim 7 or claim 8, wherein an opening (138) gives access to the inside of the dish (111), said opening (138) communicating with a top compartment (113b) of the bushing (113).

10. A wind turbine nacelle (101) according to claim 9, wherein the bottom (113a) and top (113b) compartments of the bushing (113) are separated by a separator wall (113c) having an opening (162) formed therein.

11. A wind turbine nacelle (101) according to claim 10, wherein shoes (116n) are arranged between the separator wall (113c) and the top end of the tubular chamber (109).

12. A wind turbine nacelle (101) according to any one of claims 7 to 11, wherein a braking system (168a, 168b, 169) is arranged between the bushing (113) and the tubular chamber (109).

13. A wind turbine nacelle (1, 101) according to any preceding claim, **characterized in that** it includes a steering system (23, 25, 123, 124, 125) arranged between the head (5, 105) and the body (3, 103) in order to turn said head relative to said body.

14. A wind turbine nacelle (1, 101) according to any preceding claim, **characterized in that** the head (5, 105) includes reinforcing parts (29, 129) arranged between the dish (11, 111) and the bushing (13, 113).

15. A wing turbine (41) comprising at least a vertically-extending tower (43), a nacelle (1, 101) according to any one of claims 1 to 14, blades (45), and an alternator (49) arranged in the dish (11, 111) of the head, the base (7, 107) of the body being fastened to the top end (51) of the tower.

16. A wind turbine (41) according to claim 15, **characterized in that** the base (7, 107) of the body is fastened to the top end (51) of the tower (43) by clamping (53) said elements together.
